# EUROPEAN PATENT APPLICATION

(11) **EP 3 045 424 A1**
(43) Date of publication of application: **20.07.2016**
(21) Application number: 14841783.5
(22) Date of filing: 09.09.2014
(51) Int. Cl.: B67D 7/08, H02H 3/08

(54) **HANDHELD FUEL DISTRIBUTOR CONTROL DEVICE WITH CURRENT-LIMITING BATTERY PACK**

(30) Priority: 09.09.2013 CN 201320558073 U; 19.02.2014 CN 201410056435
(71) Applicant: Gilbarco China Co., Ltd., Beijing 101200 (CN)
(72) Inventor: MAURIZIO, Bonelli, I-51014 Pescia (PT) (IT); ZHAO, Jinqiu, Beijing 100040 (CN)
(74) Representative: Gray, James
(86) International application number: PCT/CN2014/086145
(87) International publication number: WO 2015/032361

(57) **Abstract**

A hand-held device for use in attended fueling environments that is powered by an intrinsically safe battery pack. The battery pack has an integrated current-limiting protection circuit that ensures that the energy generated in the form of sparks or heat is maintained at a level below the minimum ignition energy of the explosive atmosphere.

## Description

### FIELD OF THE INVENTION

The present invention relates generally to the art of fuel dispensers. More particularly, it relates to a hand-held device for use by an attendant to operate fuel dispensers in fueling environments.

### BACKGROUND

In an unattended fueling environment-i.e., a self-service gas station-customers complete their transaction using a conventional island-type fuel dispenser with an integrated user interface. The customer uses the interface to select the fuel type and enter payment information. In this regard, the user interface is typically equipped with a card reader and a PIN pad for receipt of the payment information. Once payment is authorized, the customer uses the fuel dispenser to fuel their vehicle.

Alternatively, in attended fueling environments, which are common outside the United States, a fuel station attendant uses a hand-held device to receive payment information from the customer and authorize operation of a selected fuel dispenser. This hand-held device commonly contains a display, keypad, and magnetic card reader with which the attendant interacts.

In particular, the hand-held device operates similar to the user interface of the conventional island-type fuel dispenser except that it is carried by the attendant. In a routine transaction, a customer will pull their vehicle up to the fuel dispenser and tell the attendant the amount and type of fuel desired. The attendant will use the hand-held device to receive payment information, select fuel type, and authorize the pump to dispense fuel. The attendant will then typically process payment and print a receipt directly from the hand-held device after the fuel has been dispensed.

As a result of the fueling process, automobile fueling stations commonly have potentially hazardous atmospheres consisting of combustible vapors, gas, and dust. Due to this hazardous environment, fuel station attendants and customers must exercise care to not introduce any sources of ignition into the atmosphere. Any sparks or heat generated by fuel station equipment must be maintained at a level below the minimum ignition energy of the explosive atmosphere.

The European Commission has attempted to minimize the risk of explosion in such environments by adopting Directive 94/9/EC, commonly referred to as ATEX ("Atmospheres Explosibles") Products Directive. ATEX provides mandatory health and safety standards for equipment and protective systems intended for use in potentially explosive atmospheres. These standards are applicable within the European Union and throughout its member states.

There is a desire to construct attendant hand-held devices in a manner that is ATEX compliant.

### SUMMARY

One aspect of the present invention provides a novel hand-held device for use in attended fueling environments. The device circuitry is powered by a battery pack comprising a power source with an integrated current-limiting protection circuit. The protection circuit ensures that the energy generated in the form of sparks or heat is maintained at a level below a preselected minimum ignition energy. This preferably reduces or eliminates the risk of ignition in certain environments and ensures device compliance with ATEX standards.

### BRIEF DESCRIPTION OF THE DRAWINGS

A full and enabling disclosure of the present invention, including the best mode thereof directed to one of ordinary skill in the art, is set forth in the specification, which makes reference to the appended drawings, in which:
Figure 1 shows an exemplary attended fueling environment utilizing an attendant hand-held device constructed in accordance with an embodiment of the present invention;
Figure 2 shows the hand-held device of Figure 1 with its battery pack removed;
Figure 3 is a simplified functional diagram of certain electrical components of the hand-held device of Figure 1;
Figure 4 is another simplified functional diagram showing certain operational aspects of the protection circuit of Figure 3;
Figure 5 is a detailed circuit diagram of one embodiment of the protection circuit of Figure 3, where the protection circuit remains tripped;
Figure 6 shows an alternative embodiment of the circuit of Figure 5, where the protection circuit is reset by a push button;
Figure 7 shows an alternative embodiment of the circuit of Figure 5, where the protection circuit is reset after a certain recovery time which depends on the electrical characteristics of the circuit components;
Figure 8 shows a further alternative embodiment where the protection circuit is reset after a certain time, determined by the recovery time of the circuit components;
Figure 9 shows an alternative embodiment where the entire protection circuit as in Figure 5 is doubled for redundancy and may be reset by a push button;
Figure 10 shows an alternative embodiment of the circuit of Figure 6, where an LED is used as a visual indicator of the status of the battery; and
Figure 11 shows an alternative embodiment of the circuit of Figure 10, where the battery pack with protection circuit is used in conjunction with standard industrial control circuitry.

Repeat use of reference characters in the present specification and drawings is intended to represent same or analogous features or elements of the invention.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations.

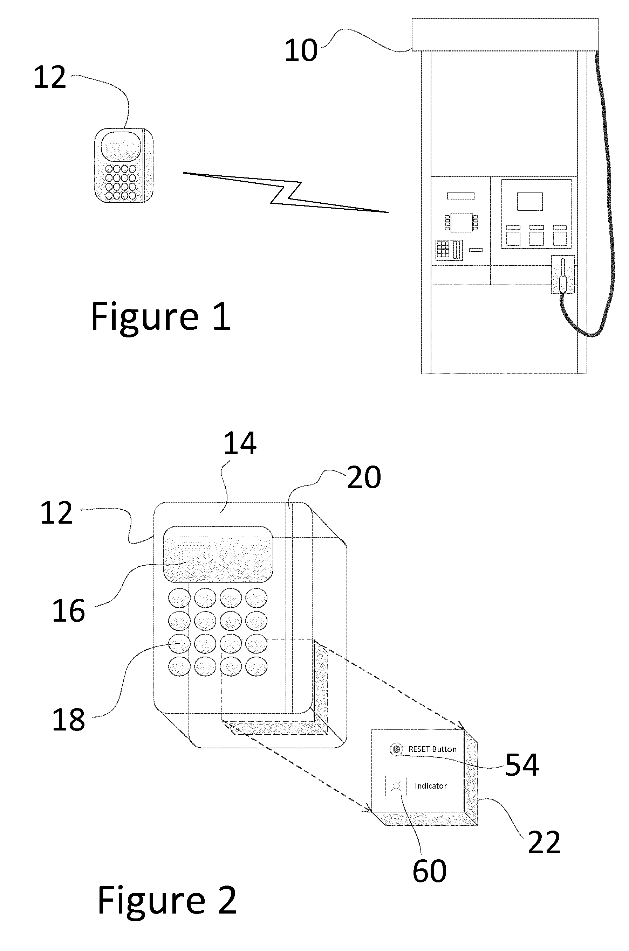

Figure 1 shows an attended fueling environment including one or more fuel dispensers 10 operationally controlled by a hand-held device 12. The fuel dispenser 10 is in fluid communication with fuel storage tanks (typically located underground) where various grades or types of fuel are stored. Once the fueling transaction is authorized, the desired grade or type of fuel can be delivered by the attendant into the customer's vehicle. Authorization of the transaction is achieved using the hand-held device 12, which is typically in wireless communication with the fuel dispenser 10 such as via WiFi, Bluetooth, ZigBee, or other suitable wireless protocol. In a preferred embodiment, the fuel station attendant uses the hand-held device 12 to complete the fueling transaction by entering the customer's desired fuel type, authorizing the fuel dispenser 10 to dispense fuel, processing customer payment, and printing a receipt.

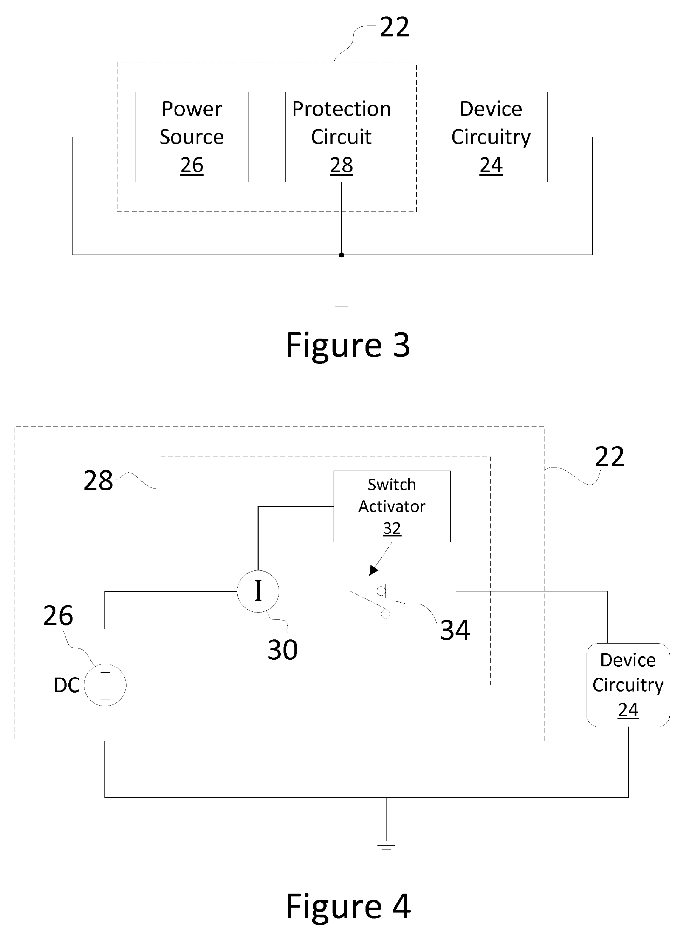

Referring now to Figure 2, additional details regarding hand-held device 12 can be described. In this regard, hand-held device 12 has a housing 14 at which a display 16, a user interface or keypad 18, and a card reader 20 are located. Card reader 20 may be adapted to read conventional magnetic stripe credit or debit cards, as well as cards having embedded microchips. The housing 14 may also preferably contain a receipt printer. The housing 14 is also configured having a suitable cavity to receive a removable battery pack 22, which powers the device circuitry 24 (see Figure 3) located inside housing 14. As one skilled in the art will recognize, battery pack 22 should have suitable terminals that engage terminals in housing 14 to complete the electrical connection. Because the hand-held device 12 preferably meets ATEX guidelines relating to safe operation in an explosive environment, it is desirable to have an intrinsically safe battery pack 22 for powering the hand-held device 12.

A general circuit diagram in accordance with a preferred embodiment of hand-held device 12 is shown in Figure 3. The device circuitry 24 of the hand-held device 12 is powered by the battery pack 22, which comprises a power source 26 and a protection circuit 28. In a preferred embodiment, the power source 26 comprises a lithium-ion battery, but the power source need not be so limited. Those skilled in the art will appreciate that the power source 26 could comprise other types of rechargeable and non-rechargeable batteries, or other compatible energy storage devices. For example, the protection circuit 28 may be scaled for use with rechargeable or non-rechargeable batteries of various types and combinations, such as series, parallel, and series/parallel combinations. The maximum allowable current may also be adjusted depending on the particular environment, for example, based on the minimum ignition point of the expected combustible vapors. Finally, the current-limiting circuit may also be used in addition to standard protective circuitry that limits the energy drawn from the battery to avoid explosion of the battery itself and/or control the battery charging and discharging operations.

Additional detail regarding the operation of battery pack 22 is illustrated in Figure 4. As shown, the power source 26 is electrically connected to the protection circuit 28 which is electrically connected to the device circuitry 24 in the hand-held device 12. The protection circuit 28 comprises a current sensor 30 to measure the instantaneous current flowing from the power source 26. If the sensed current is above a threshold level, perhaps indicating a fault in the hand-held device or some other hazardous operating condition, a switch activator 32 is used to control a switch 34, which disconnects and isolates the battery pack 22 from the device circuitry 24. In particular, the switch 34 opens the circuit powering the device circuitry 24, thus avoiding ignition of any explosive vapors.

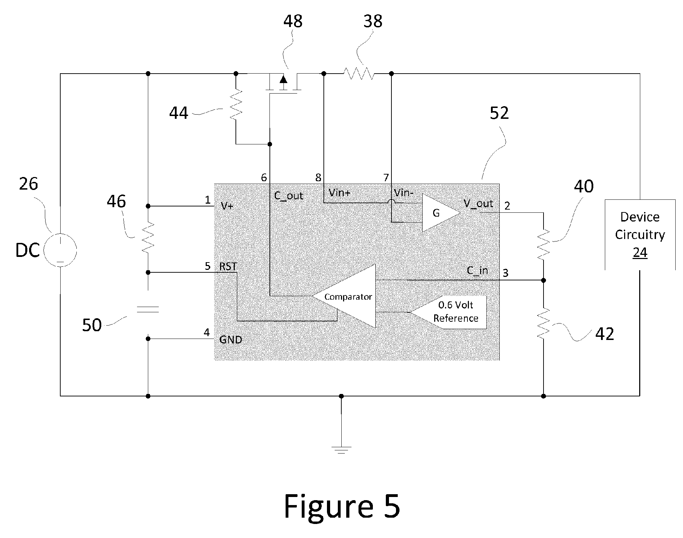

A preferred embodiment of the current-limiting protection circuit 28 is shown in Figure 5. In this embodiment, the current sensor 30 and the switch activator 32 are formed utilizing one integrated circuit, a Texas Instruments model INA200 current sense monitor. Those skilled in the art will appreciate that use of the INA200 is by way of example only, as other current monitors and circuit configurations are possible that would achieve analogous effects without departing from the scope and spirit of the present invention.

When the hand-held device 12 is in normal operation, current flows from the power source 26, across shunt resistor 38, and powers the device circuitry 24. It will be appreciated that the value of resistor 38 should be chosen such that it does not substantially impact the operation of device circuitry 24 during normal conditions. The INA200 current-shunt monitor detects the voltage drop across the terminals of the shunt resistor 38 and amplifies this voltage to Vₒᵤₜ in order to improve signal measuring accuracy. The resistance values of resistors 40 and 42 may be adjusted so that the Cᵢₙ voltage corresponds to the desired current trip point. Cᵢₙ is compared to the fixed internal reference voltage of the INA200, which is 0.6 volts. The comparator output, Cₒᵤₜ, then provides an output state of either HIGH or LOW depending on whether the current sensed by the shunt resistor 38 is above the current trip point.

When Cₒᵤₜ is HIGH-i.e., when current is above the current trip point-switching element 48 opens to stop further current flow to device circuitry 24. In this embodiment, switching element 48 comprises a MOSFET device that operates in conjunction with a pull-up resistor 44. In particular, pull-up resistor 44 allows the comparator output to be pulled up to the supply voltage of the power source 26. This voltage is also the gate voltage to the MOSFET (switching element 48). As one skilled in the art will recognize, a MOSFET is a type of transistor that may be used as a switch in electrical circuits. In the preferred embodiment, a P-Channel enhancement MOSFET is used, such that the switch is opened when the current limit has been reached. When the comparator output is LOW, the comparator output voltage is 0 volts, and the switching element 48 remains closed (i.e., conductive).

When the switching element 48 opens the circuit, current is prevented from flowing to the device circuitry 24. Because this will cause the voltage drop across the shunt resistor 38 to fall to 0 volts, the comparator output would normally fall back to a LOW level, thus closing the switching element 48 and allowing current to once again flow. This can result in circuit oscillations if the over-current condition has not been corrected. Therefore, the comparator has a latching capability to prevent such oscillations by which Cₒᵤₜ may only be reset by using the RESET pin on the INA200. Alternatively, the latching feature can be disabled by leaving the RESET pin open or connecting it to ground. In Figure 5, the capacitor 50 ensures that the RESET pin is not tripped-i.e., Cₒᵤₜ remains latched-until the power source 18 is completely discharged or removed. This is a particularly advantageous aspect of this embodiment.

In this regard, capacitor 50 is located between the RESET terminal of chip 52 (e.g., INA 200) and ground. Power source 26 charges capacitor 50 through resistor 46 such that a high signal is stored on capacitor 50. As noted above, this will maintain switching element 48 in the open state. Power source 26 would need to be discharged in order to close switching element 48. If rechargeable, power source 26 could then be recharged and reuse of the battery pack could be attempted. If the power source 26 is not rechargeable, the battery pack would be assumed to be defective and properly discarded.

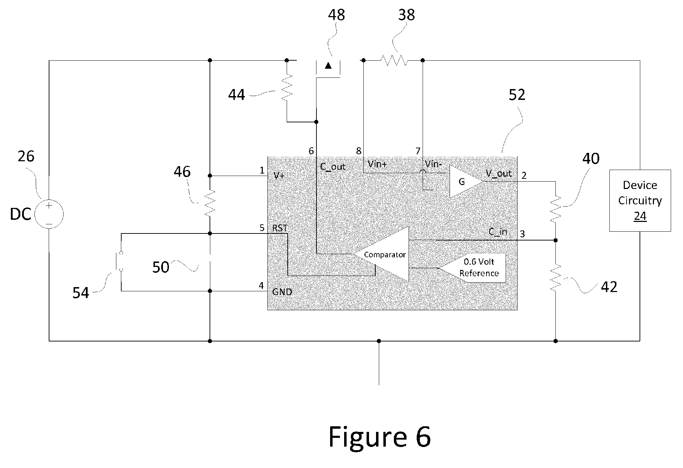

In an alternative embodiment, shown in Figure 6, Cₒᵤₜ may be reset by a push button 54 actuated by human intervention (out of any possible hazardous situation). As can be seen, momentary pressing of the switch 54 discharges capacitor 50, thus bringing the RESET terminal to a low level. This allows for the quick and convenient swapping of the battery pack 22 into a new hand-held device 12 (or one that has been repaired) without having to discharge the battery.

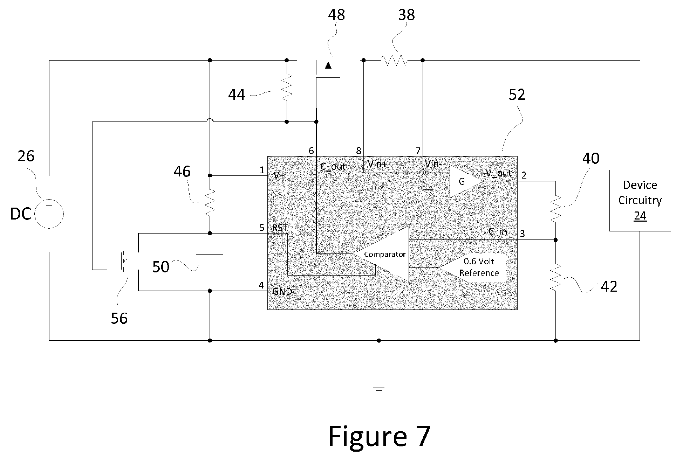

Another embodiment provides a circuit arrangement where Cₒᵤₜ is reset after a certain time, determined by the recovery time of the circuit components. For example, as shown in Figure 7, if the resistance of resistor 46 is 330 kΩ and the capacitance of the decoupling capacitor 50 is 1 µF, the recovery time is about 100 msec when one lithium-ion cell is connected to the battery terminals.

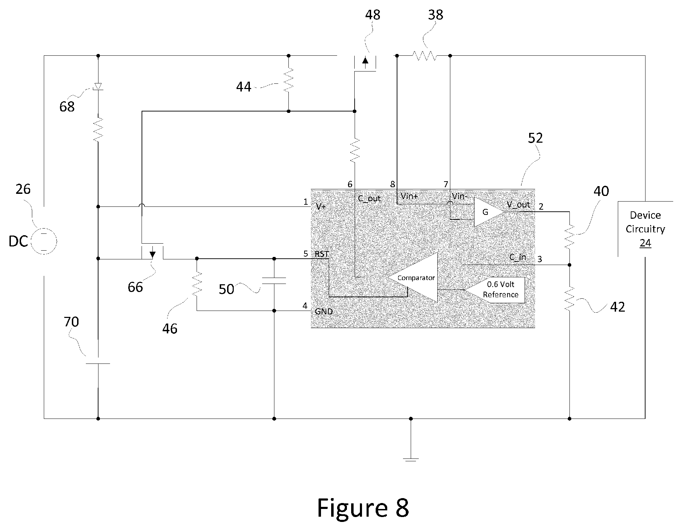

In yet another embodiment, shown in Figure 8, Cₒᵤₜ remains latched for a certain time, determined by the recovery time of the circuit components. When Cₒᵤₜ latches, both the switching elements 48 and 66 are opened. The capacitor 50 starts to discharge and when the voltage on pin RST of the control integrated circuit 52 reaches the reset value, Cₒᵤₜ resets and switching elements 48 and 66 are closed. In case of continuous over-current conditions, the circuit will start-stop with a repetition time due to the values of resistor 46 and capacitor 50. For example, as shown in Figure 8, if the resistance of resistor 46 is 1.8 MΩ and the capacitance of the decoupling capacitor 50 is 1 µF, the recovery time is about 1 sec when the lithium-ion cells are connected to the battery terminals. The diode 68 and capacitor 70 are added to stabilize the start-stop behavior in any condition of loads.

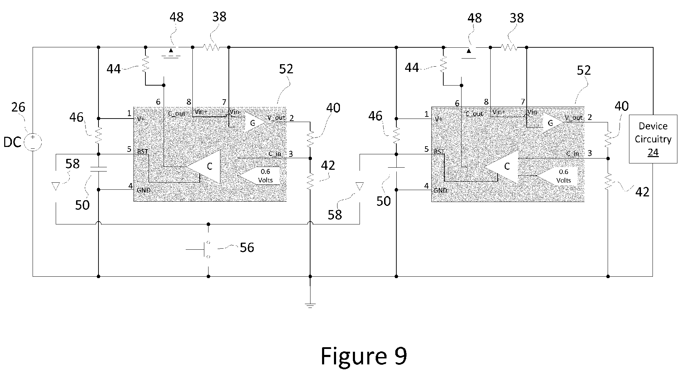

Figure 9 shows another embodiment where the entire protection circuit 28 is doubled for redundancy. Thus, if one or more components fail in one circuit, there is another, fully-operating circuit to prevent an over-current condition. The tolerances of the components cause one circuit to be the main circuit while the other remains transparent until the main circuit fails. In addition, blocking diodes 58 may be used to reset both circuits by activating the switch 56.

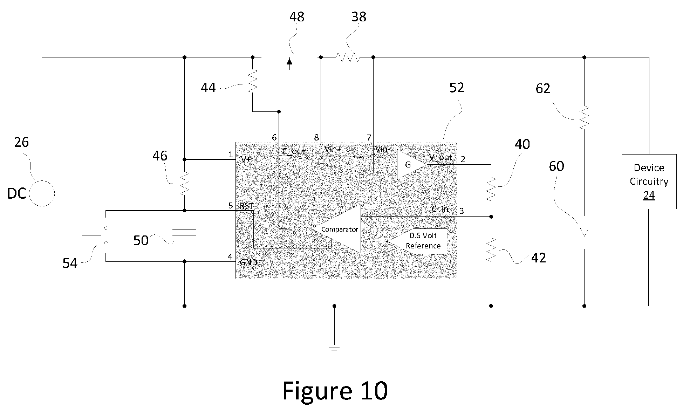

Figure 10 illustrates an additional embodiment similar in many ways to the embodiment of Figure 6. The embodiment, however, includes an LED indicator 60 that provides a visual indication of the state of the battery. For example, the LED indicator 60 can indicate whether the battery state is OK, FAIL, or DISCHARGED. One skilled in the art will appreciate that the indicator 60 can, instead of an LED, be any other indication device that provides notice to the operator regarding the state of the battery.

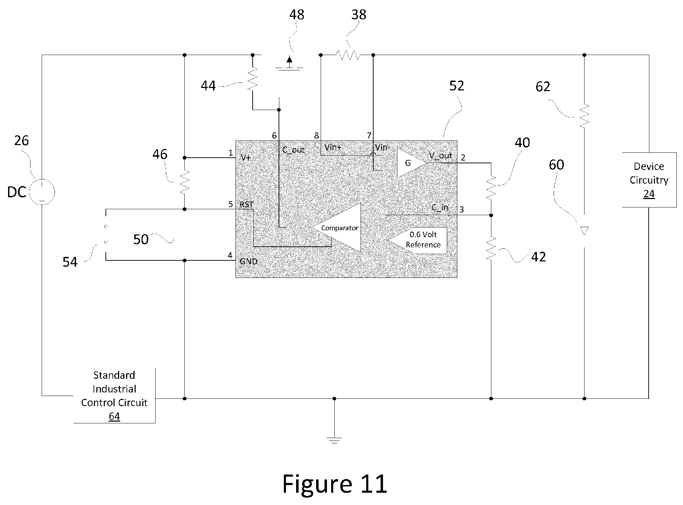

In addition, as shown in Figure 11, the current-limiting circuit can be combined with a standard industrial control circuit 64 arrangement to allow controlled charging, discharging, temperature control, etc. of the power source 26 or device circuitry 24.

In any given embodiment, the protection circuit 28 can be located in the same enclosure as the power source 26, providing a compact, robust, and safe battery pack 22 to power any equipment intended to be used in hazardous areas. An aperture may be included in such a battery pack 22 to allow for push button 54 operation, and such apertures may be protected by a label or seal to check the reset operation under service conditions for safety reasons. Also, the protection circuit 28 may be coated, potted, or encapsulated inside or outside the enclosure of the battery pack 22 to exclude contact with gases, vapor, or mists from flammable substances so it is allowed to be used in hazardous areas and is in compliance with ATEX standards.

Although the invention has been described using preferred embodiments with varying circuit configurations and components, any combinations of these features are included within the scope of the invention. Explanation is by was of example only and the disclosure is not meant to be limiting.

## Claims

1. A hand-held device for wirelessly communicating with and controlling a fuel dispenser, the hand-held device comprising:
a display;
a user interface;
a card reader; and
a housing configured to receive a battery pack having an integrated current-limiting protection circuit.

2. The hand-held device of claim 1, wherein the current-limiting protection circuit ensures that the energy in the form of sparks or heat is maintained below the minimum ignition energy of the explosive atmosphere.

3. A battery pack for use in a hand-held device at an attended fueling environment, the battery pack comprising:
a power source; and
a current-limiting protection circuit,
wherein the protection circuit reduces the risk of ignition of flammable vapors by limiting the flow of current in cases where the battery pack is overheating or where there is a device fault that is causing a short circuit or sparking to occur.

4. A current-limiting arrangement for an intrinsically safe battery pack to be used in attended fueling environments, comprising:
a power source;
a protection circuit; and
device circuitry,
wherein the protection circuit disconnects the device circuitry in the event that the current trip limit is reached.

5. A method for controlling a fuel dispenser in an attended fueling environment comprising:
providing an attendant with a hand-held device for wirelessly communicating with and controlling the fuel dispenser;
powering the hand-held device circuitry by a battery pack comprising a power source and an integrated current-limiting protection circuit; and
providing means for safely resetting the protection circuit and safely discharging the battery pack when the hand-held device is faulty.
